# EUROPEAN PATENT APPLICATION

(11) **EP 4 524 051 A1**
(43) Date of publication of application: **19.03.2025**
(21) Application number: 23923207.7
(22) Date of filing: 22.09.2023
(51) Int. Cl.: B65D 47/34

(54) **ELONGATED ALL-PLASTIC SELF-LOCKING PUMP**

(30) Priority: 28.07.2023 CN 202310950021
(71) Applicant: Majesty Holdings Co., Ltd., Zhongshan, Guangdong 528400 (CN)
(72) Inventor: LIANG, Peihui, Zhongshan, Guangdong 528400 (CN); ZHU, Maoyong, Zhongshan, Guangdong 528400 (CN); ZHANG, Yonglei, Zhongshan, Guangdong 528400 (CN); LIANG, Jinkao, Zhongshan, Guangdong 528400 (CN)
(74) Representative: IK-IP LTD
(86) International application number: PCT/CN2023/120560
(87) International publication number: WO 2025/025321

(57) **Abstract**

Disclosed is a lengthened all-plastic self-locking pump, including a bottle locking cap capable of being fixed on a liquid containing bottle, where a pump body and a locking cap capable of fixing the pump body on the bottle locking cap are provided on the bottle locking cap; a liquid storage chamber, a communication port communicated with the liquid storage chamber, a one-way valve capable of controlling the communication port to open, a pump rod capable of relatively sliding up and down and having an upper end penetrating out of the locking cap, and a piston sheathing on the pump rod and driven by the pump rod are provided in the pump body; the piston is sealingly inserted into the liquid storage chamber so that a pressure chamber is formed below the piston in the liquid storage chamber; when the piston moves upwards, a negative pressure is formed in the pressure chamber so that the one-way valve opens to make the liquid enter the pressure chamber; the upper end of the pump rod is provided with a pressing head capable of driving the pump rod downwards so that the piston squeezes the liquid in the liquid storage chamber downwards to flow out, and a lower end of the pump rod is provided with a connecting head penetrating downwards out of the piston and extending into the pressure chamber; a plastic spring having one end connected to the connecting head and capable of elastically pressing the pump rod to reset upwards is provided in the pressure chamber, and the plastic spring includes a plurality of elastic units connected from top to bottom.

## Description

### Field of the Invention

The present disclosure relates to a lengthened all-plastic self-locking pump.

### Background of the Invention

Liquid products such as body wash and shampoo are essential in people's daily lives and are typically contained in specialized bottles. The liquid is squeezed out of the mouth of the pump head by pressing a pressing pump at an upper end of the bottle for use. The pressing pump generally includes a pressing head, a locking cap, a metal spring, a threaded cap, a main body, a main column, a piston, an auxiliary column, a one-way valve, and a straw. This kind of pressing pump returns the pressing head through the metal spring, and the remaining components are plastic parts. When the pressing pump is recycled and remolded, the metal spring needs to be manually taken out and then remolded, which is time-consuming and laborious and has low production efficiency. In addition, the metal spring may be in direct contact with the emulsion in the pump chamber. When the metal spring rusts, it may contaminate the liquid, which is not conducive to long-term use of the product.

Therefore, the present disclosure has been provided based on the above deficiencies.

### Summary of the Invention

The object of the present disclosure is to overcome the deficiencies of the related art and provide a lengthened all-plastic self-locking pump which is simple in structure and easy to recycle.

The present disclosure is achieved by the following technical solution.

A lengthened all-plastic self-locking pump is provided, including a bottle locking cap 1 capable of being fixed on a liquid containing bottle, where a pump body 2 and a locking cap 3 capable of fixing the pump body 2 on the bottle locking cap 1 are provided on the bottle locking cap 1; a liquid storage chamber 21, a communication port 22 communicated with the liquid storage chamber 21, a one-way valve 4 capable of controlling the communication port 22 to open so that liquid enters the liquid storage chamber 21, a pump rod 5 capable of relatively sliding up and down and having an upper end penetrating out of the locking cap 3, and a piston 8 sheathing on the pump rod 5 and driven by the pump rod 5 are provided in the pump body 2; the piston 8 is sealingly inserted into the liquid storage chamber 21 so that a pressure chamber is formed below the piston 8 in the liquid storage chamber 21; when the piston 8 moves upwards, a negative pressure is formed in the pressure chamber so that the one-way valve 4 opens to make the liquid enter the pressure chamber; the upper end of the pump rod 5 is provided with a pressing head 6 capable of driving the pump rod 5 downwards so that the piston 8 squeezes the liquid in the liquid storage chamber 21 downwards to flow out, and a lower end of the pump rod 5 is provided with a connecting head 53 penetrating downwards out of the piston 8 and extending into the pressure chamber; a plastic spring 7 having one end connected to the connecting head 53 and capable of elastically pressing the pump rod 5 to reset upwards is provided in the pressure chamber, and the plastic spring 7 includes a plurality of elastic units connected from top to bottom.

According to the above-mentioned lengthened all-plastic self-locking pump, the elastic units include a plurality of support connecting pieces 71 provided at intervals from bottom to top, and elastic pieces 72 are provided between adjacent support connecting pieces 71.

According to the above-mentioned lengthened all-plastic self-locking pump, two ends of the elastic piece 72 are provided with positioning columns 73 which extend vertically and abut against each other when the elastic piece 72 is squeezed and deformed.

According to the above-mentioned lengthened all-plastic self-locking pump, the elastic piece 72 is an arc-shaped elastic piece protruding away from a central axis of the plastic spring 7.

According to the above-mentioned lengthened all-plastic self-locking pump, the elastic unit includes two X-shaped elastic arms 74 provided opposite to each other, and ends of each of the two X-shaped elastic arms 74 are connected in one-to-one correspondence and enclose a vertical through hole 75; the X-shaped elastic arms 74 of, located at the top and bottom, of the plastic spring 7 are each connected to a support connecting piece 71.

According to the above-mentioned lengthened all-plastic self-locking pump, the elastic unit includes two arc-shaped elastic strips 77 provided opposite to each other, and ends of the two arc-shaped elastic strips 77 are connected in one-to-one correspondence and enclose a ring; three adjacent elastic units are successively connected end-to-end in a Z-shaped structure; the arc-shaped elastic strips 77, located at the top and bottom, of the plastic spring 7 are each connected to a support connecting piece 71.

According to the above-mentioned lengthened all-plastic self-locking pump, the support connecting piece 71 on at least one end is arranged with a plug hole 711 for inserting and positioning the connecting head 53.

According to the above-mentioned lengthened all-plastic self-locking pump, the support connecting piece 71 is of a circular ring sheet structure.

According to the above-mentioned lengthened all-plastic self-locking pump, the pressing head 6 is provided with a positioning block 61, and the locking cap 3 is provided with notches 31 for the positioning block 61 to clamp into and abut against so that the pressing head 6 is locked and not able to move down, and sliding grooves 32 for the positioning block 61 to slide up and down when the pressing head 6 is rotated to remove the positioning block 61 from the notches 31.

Compared with the related art, the present disclosure has the following advantages.
1. In the present disclosure, the plastic spring with good resilience replaces a metal spring, and the remaining components are all made of plastic. A pressing pump may be directly recycled and remolded without disassembling and taking out the spring, which is highly productive, energy efficient, and environmentally friendly.
2. The plastic spring is integrally formed by a plurality of elastic units, with a simple structure that is easy to manufacture so that an effective stroke of the plastic spring is long, and the range is wide. Springs with different elastic forces may be produced and used in different pressing pumps according to needs.

### Brief Description of the Drawings

Fig. 1 is a perspective view of the present disclosure;
Fig. 2 is a sectional view of embodiment 1 of the present disclosure;
Fig. 3 is a perspective view of a plastic spring of embodiment 1 of the present disclosure;
Fig. 4 is a sectional view of embodiment 2 of the present disclosure;
Fig. 5 is a perspective view of a plastic spring of embodiment 2 of the present disclosure;
Fig. 6 is a sectional view of embodiment 3 of the present disclosure;
Fig. 7 is a perspective view of a plastic spring of embodiment 3 of the present disclosure;
Fig. 8 is a perspective view of a pressing head of the present disclosure; and
Fig. 9 is a perspective view of a locking cap of the present disclosure.

### Detailed Description of the Embodiments

The present disclosure is further described below in conjunction with the accompanying drawings.

### Embodiment 1:

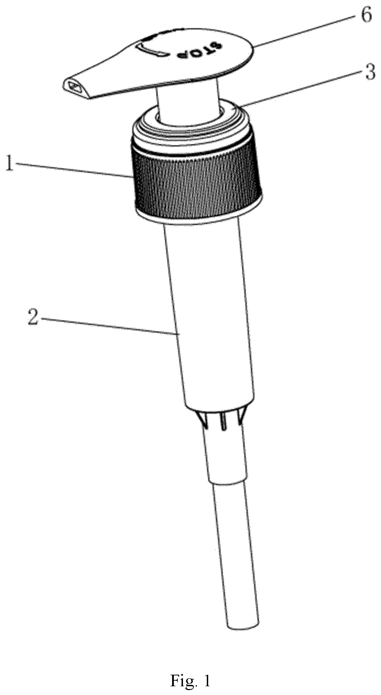

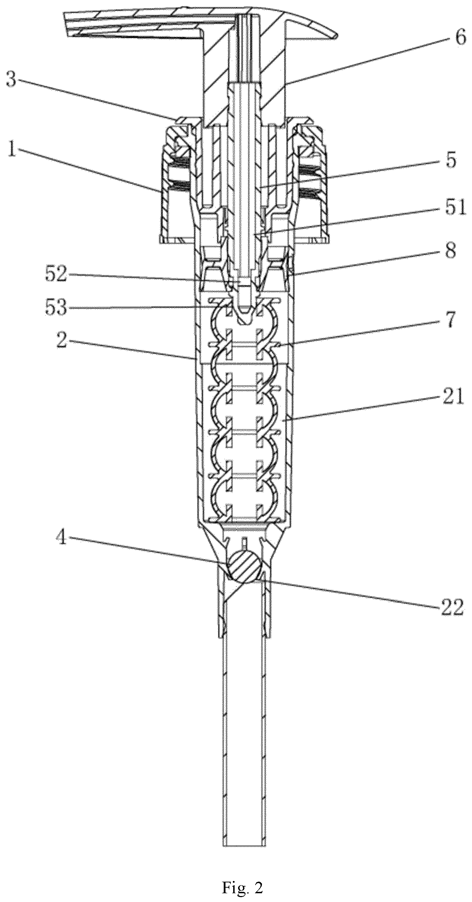

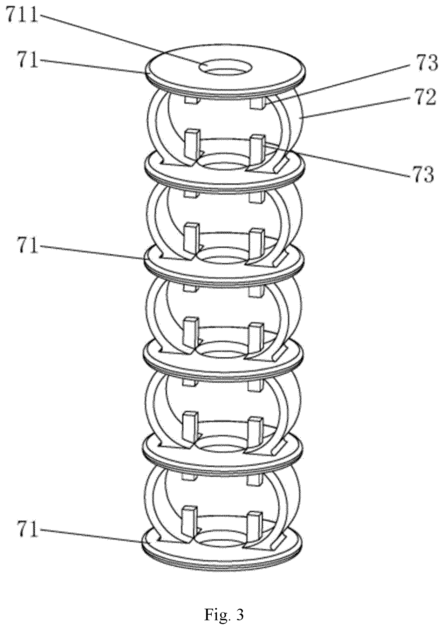

As shown in Figs. 1 to 3, a lengthened all-plastic self-locking pump is provided, including a bottle locking cap 1 capable of being fixed on a liquid containing bottle. A pump body 2 and a locking cap 3 capable of fixing the pump body 2 on the bottle locking cap 1 are provided on the bottle locking cap 1. A liquid storage chamber 21, a communication port 22 communicated with the liquid storage chamber 21, a one-way valve 4 capable of controlling the communication port 22 to open so that liquid enters the liquid storage chamber 21, a pump rod 5 capable of relatively sliding up and down and having an upper end penetrating out of the locking cap 3, and a piston 8 sheathing on the pump rod 5 and driven by the pump rod 5 are provided in the pump body 2. The piston 8 is sealingly inserted into the liquid storage chamber 21 so that a pressure chamber is formed below the piston 8 in the liquid storage chamber 21. When the piston 8 moves upwards, a negative pressure is formed in the pressure chamber so that the one-way valve 4 opens to make the liquid enter the pressure chamber. The upper end of the pump rod 5 is provided with a pressing head 6 capable of driving the pump rod 5 downwards so that the piston 8 squeezes the liquid in the liquid storage chamber 21 downwards to flow out, and a lower end of the pump rod 5 is provided with a connecting head 53 penetrating downwards out of the piston 8 and extending into the pressure chamber. A plastic spring 7 having one end connected to the connecting head 53 and capable of elastically pressing the pump rod 5 to reset upwards is provided in the pressure chamber, and the plastic spring 7 includes a plurality of elastic units connected from top to bottom. In the present disclosure, the plastic spring with good resilience replaces a metal spring, and the remaining components are all made of plastic. A pressing pump may be directly recycled and remolded without disassembling and taking out the spring, which is highly productive, energy efficient, and environmentally friendly. The plastic spring is integrally formed by a plurality of elastic units, with a simple structure that is easy to manufacture so that an effective stroke of the plastic spring is long, and the range is wide. Springs with different elastic forces may be produced and used in different pressing pumps according to needs.

As an implementation of the plastic spring, the elastic units include a plurality of support connecting pieces 71 provided at intervals from bottom to top, and elastic pieces 72 are provided between adjacent support connecting pieces 71. The above-mentioned structure may improve the stress stability and elasticity of the plastic spring.

Specifically, two ends of the elastic piece 72 are provided with positioning columns 73 which extend vertically and abut against each other when the elastic piece 72 is squeezed and deformed. When the plastic spring is squeezed and contracted into position, the positioning columns 73 abut against each other to achieve limiting, thereby preventing the plastic spring from being damaged due to excessive compression.

Specifically, the elastic piece 72 is an arc-shaped elastic piece protruding away from a central axis of the plastic spring 7. When the plastic spring is compressed, the arc-shaped elastic piece bends and deforms towards the outside of the plastic spring 7 to store an elastic force, and the elasticity is strong.

Specifically, the support connecting piece 71 on at least one end is arranged with a plug hole 711 for inserting and positioning the connecting head 53. The pump rod is connected to the plastic spring through the cooperation of the connecting head 53 and the plug hole 711 so that the plastic spring is deformed stably when it is squeezed and contracted and does not run out of position.

Specifically, the support connecting piece 71 is of a circular ring sheet structure. The circular ring sheet structures are all coaxially parallel. The circular ring sheet structure located at the bottom of the spring abuts against an inner bottom wall of the liquid storage chamber, and the circular ring sheet structure located at the top of the spring abuts against the pump rod.

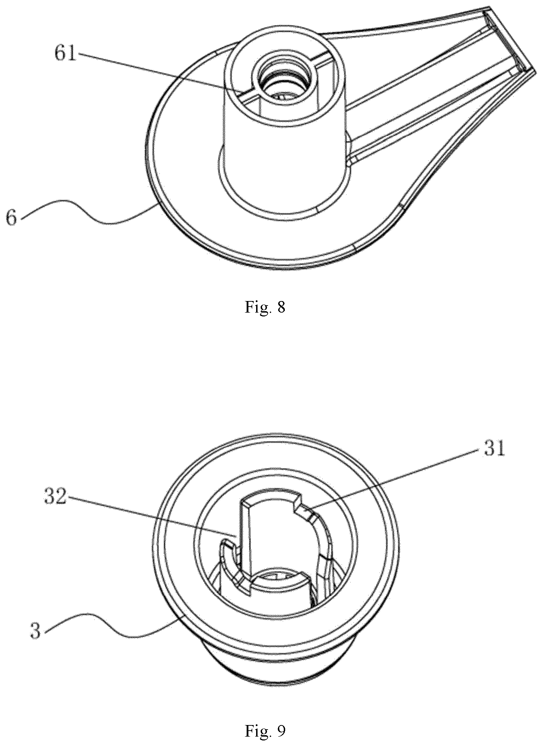

As shown in Fig. 8, the pressing head 6 is provided with a positioning block 61. As shown in Fig. 9, the locking cap 3 is provided with notches 31 for the positioning block 61 to clamp into and abut against so that the pressing head 6 is locked and not able to move down, and sliding grooves 32 for the positioning block 61 to slide up and down when the pressing head 6 is rotated to remove the positioning block 61 from the notches 31. When the positioning block on the pressing head is rotated to positions of the sliding grooves of the locking cap, the pressing head may be pressed down. When the positioning block on the pressing head is rotated to positions of the notches of the locking cap, the positioning block abuts against the notches, and the push button is restricted from pressing down, thereby achieving self-locking.

### Embodiment 2:

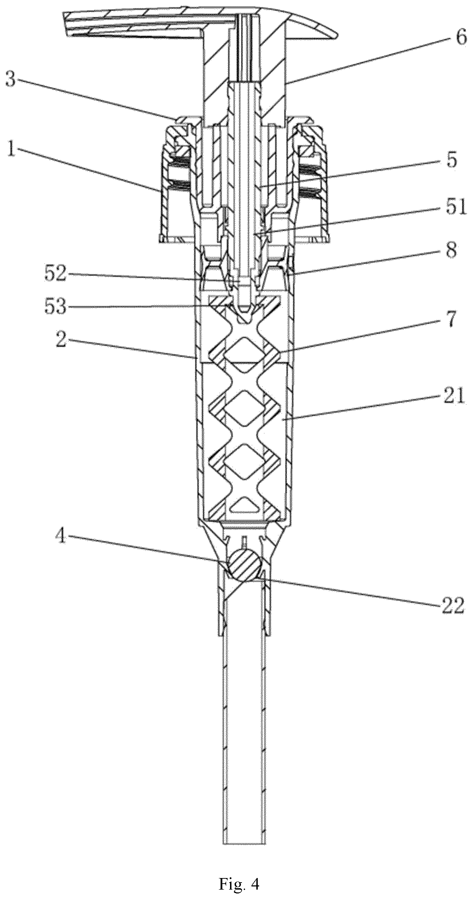

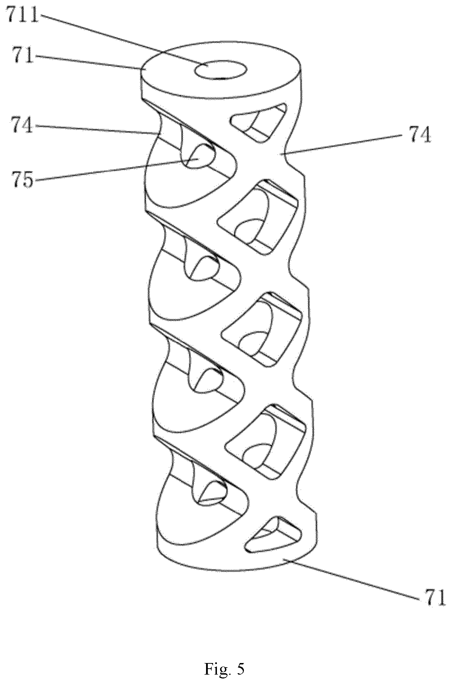

As shown in Figs. 4 and 5, the main difference between embodiment 2 and embodiment 1 lies in that structures of plastic springs are different. **In** this embodiment, an elastic unit includes two X-shaped elastic arms 74 provided opposite to each other, and ends of each of the two X-shaped elastic arms 74 are connected in one-to-one correspondence and enclose a vertical through hole 75. The X-shaped elastic arms 74, located at the top and bottom, of the plastic spring 7 are each connected to a support connecting piece 71.

### Embodiment 3:

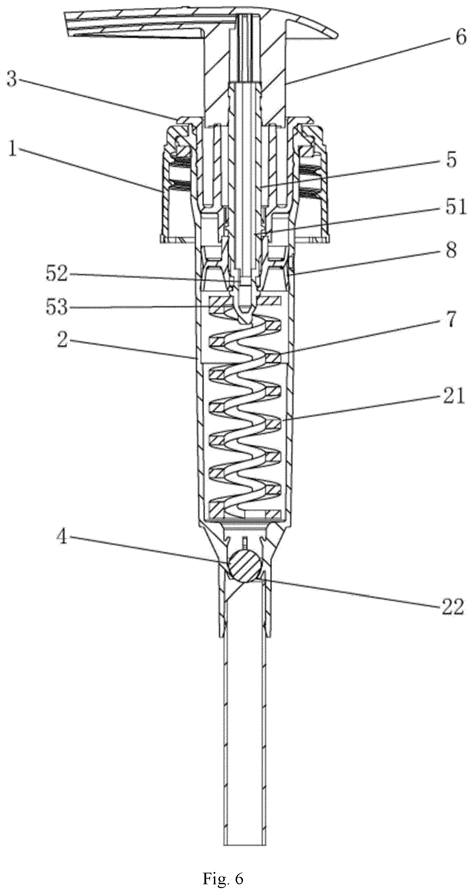

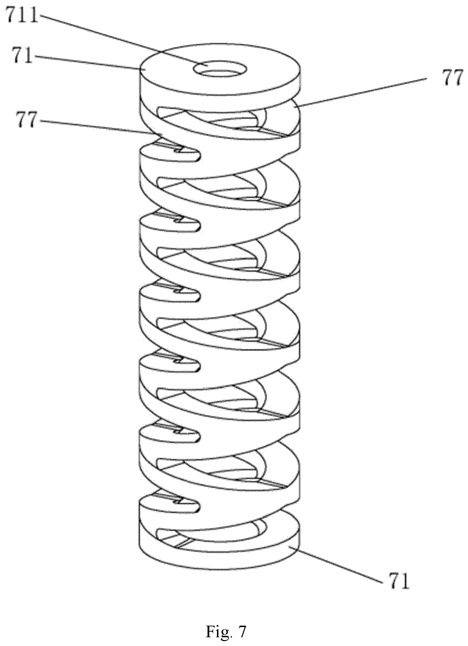

As shown in Figs. 6 and 7, similarly, the main difference between embodiment 3 and embodiment 1 lies in that structures of plastic springs are different. An elastic unit includes two arc-shaped elastic strips 77 provided opposite to each other, and ends of the two arc-shaped elastic strips 77 are connected in one-to-one correspondence and enclose a ring. Three adjacent elastic units are successively connected end-to-end in a Z-shaped structure. The arc-shaped elastic strips 77, located at the top and bottom, of the plastic spring 7 are each connected to a support connecting piece 71. The two support connecting pieces 71 are of parallel circular ring sheet structures. The ring structure enclosed by the arc-shaped elastic strips 77 is inclined, and two elastic units are inclined in opposite directions from top to bottom. With the above-mentioned structure, the elastic units have good deformation stability and maintain good elasticity in an axial direction.

In the present disclosure, a liquid outlet passage 51 communicated with a liquid outlet end of the pressing head 6 is provided in the pump rod 5, and the lower end of the pump rod 5 is provided with a liquid inlet 52 sealed by the piston 8. The pressing head 6 is pressed to move the pump rod 5 downwards relative to the piston 8, and then the liquid inlet 52 is opened to enable the liquid in the pressure chamber to enter the liquid outlet passage 51. When the pressing head 6 at the top is pressed, the pressing head 6 drives the pump rod 5 so that the pump rod 5 moves downwards relative to the piston 8, and then the liquid inlet 52 is opened. Then, the pressing head 6 is pressed continuously so that the pump rod 5 drives the piston 8 to move downwards to generate air pressure, and the liquid in the pressure chamber is sent to the liquid outlet end of the pressing head 6 through the liquid inlet 52 and the liquid outlet passage 51. When the pressing head 6 is pressed and the liquid is pumped out, the plastic spring 7 elastically presses the pump rod 5 to drive the piston 8 to move upwards to reset, and a negative pressure is generated in the pressure chamber to suck the liquid from the containing bottle for the next use.

## Claims

1. A lengthened all-plastic self-locking pump, comprising a bottle locking cap (1) capable of being fixed on a liquid containing bottle, wherein a pump body (2) and a locking cap (3) capable of fixing the pump body (2) on the bottle locking cap (1) are provided on the bottle locking cap (1); a liquid storage chamber (21), a communication port (22) communicated with the liquid storage chamber (21), a one-way valve (4) capable of controlling the communication port (22) to open so that liquid enters the liquid storage chamber (21), a pump rod (5) capable of relatively sliding up and down and having an upper end penetrating out of the locking cap (3), and a piston (8) sheathing on the pump rod (5) and driven by the pump rod (5) are provided in the pump body (2); the piston (8) is sealingly inserted into the liquid storage chamber (21) so that a pressure chamber is formed below the piston (8) in the liquid storage chamber (21); when the piston (8) moves upwards, a negative pressure is formed in the pressure chamber so that the one-way valve (4) opens to make the liquid enter the pressure chamber; the upper end of the pump rod (5) is provided with a pressing head (6) capable of driving the pump rod (5) downwards so that the piston (8) squeezes the liquid in the liquid storage chamber (21) downwards to flow out, and a lower end of the pump rod (5) is provided with a connecting head (53) penetrating downwards out of the piston (8) and extending into the pressure chamber; a plastic spring (7) having one end connected to the connecting head (53) and capable of elastically pressing the pump rod (5) to reset upwards is provided in the pressure chamber, and the plastic spring (7) comprises a plurality of elastic units connected from top to bottom.

2. The lengthened all-plastic self-locking pump according to claim 1, wherein the elastic units comprise a plurality of support connecting pieces (71) provided at intervals from bottom to top, and elastic pieces (72) are provided between adjacent support connecting pieces (71).

3. The lengthened all-plastic self-locking pump according to claim 2, wherein two ends of the elastic piece (72) are provided with positioning columns (73) which extend vertically and abut against each other when the elastic piece (72) is squeezed and deformed.

4. The lengthened all-plastic self-locking pump according to claim 2, wherein the elastic piece (72) is an arc-shaped elastic piece protruding away from a central axis of the plastic spring (7).

5. The lengthened all-plastic self-locking pump according to claim 1, wherein the elastic unit comprises two X-shaped elastic arms (74) provided opposite to each other, and ends of each of the two X-shaped elastic arms (74) are connected in one-to-one correspondence and enclose a vertical through hole (75); the X-shaped elastic arms (74), located at the top and bottom, of the plastic spring (7) are each connected to a support connecting piece (71).

6. The lengthened all-plastic self-locking pump according to claim 1, wherein the elastic unit comprises two arc-shaped elastic strips (77) provided opposite to each other, and ends of the two arc-shaped elastic strips (77) are connected in one-to-one correspondence and enclose a ring; three adjacent elastic units are successively connected end-to-end in a Z-shaped structure; the arc-shaped elastic strips (77), located at the top and bottom, of the plastic spring (7) are each connected to a support connecting piece (71).

7. The lengthened all-plastic self-locking pump according to any one of claims 2-6, wherein the support connecting piece (71) on at least one end is arranged with a plug hole (711) for inserting and positioning the connecting head (53).

8. The lengthened all-plastic self-locking pump according to claim 7, wherein the support connecting piece (71) is of a circular ring sheet structure.

9. The lengthened all-plastic self-locking pump according to claim 1, wherein the pressing head (6) is provided with a positioning block (61), and the locking cap (3) is provided with notches (31) for the positioning block (61) to clamp into and abut against so that the pressing head (6) is locked and not able to move down, and sliding grooves (32) for the positioning block (61) to slide up and down when the pressing head (6) is rotated to remove the positioning block (61) from the notches (31).
